# FASCICULE DE BREVET EUROPEEN

(11) **EP 3 421 336 B1**
(45) Date de publication et mention de la délivrance du brevet: **15.04.2020**
(21) Numéro de dépôt: 18177370.6
(22) Date de dépôt: 12.06.2018
(51) Int. Cl.: B62D 49/06, B62D 49/08

(54) **DISPOSITIF DE SUPPORT POUR TRACTEUR, NOTAMMENT DE TYPE AGRICOLE**
BEFESTIGUNGSVORRICHTUNG FÜR TRAKTOR, INSBESONDERE VOM LANDWIRTSCHAFTLICHEN TYP
SUPPORT SYSTEM FOR TRACTOR, IN PARTICULAR OF THE AGRICULTURAL TYPE

(30) Priorité: 30.06.2017 FR 1756124
(43) Date de publication de la demande: 02.01.2019
(73) Titulaire: Althimasse, 22600 Loudéac (FR)
(72) Inventeur: THOONSEN, Joseph, 22600 Loudéac (FR)
(74) Mandataire: Fédit-Loriot

(56) Documents cités:
- EP-A1- 2 380 804
- EP-A1- 2 842 808
- FR-A1- 2 953 478

## Description

L'invention concerne un dispositif de support adapté à coopérer avec un dispositif d'attelage avant et/ou arrière d'un tracteur, notamment d'un tracteur agricole.

Il est connu d'adjoindre au tracteur un système de lestage et d'équilibrage, notamment pour accroître le poids du tracteur durant des opérations requérant des forces de traction élevées. Ce système de lestage comprend des masses d'alourdissement, le plus souvent d'une seule pièce venue de fonderie, destinées à être accrochées à un dispositif d'attelage du tracteur, de type dispositif de relevage avant et/ou arrière. Une telle masse présente classiquement une face supérieure, une face inférieure, deux faces orientées transversalement à la direction de progression du tracteur, et deux faces latérales sensiblement parallèles à la direction de progression, chaque face latérale comportant un piton ou axe transversal constituant un moyen de prise pour le dispositif de relevage du tracteur, constitué typiquement de deux bras de relevage de part et d'autre de la masse, pourvus à leur extrémité de crochet soutenant la masse via ses axes transversaux. Un moyen d'accrochage d'un troisième point d'attelage peut être prévu sur la face supérieure de la masse pour éviter un mouvement d'oscillation autour des pitons ou axes latéraux. Des masses de ce type sont bien connues, notamment par l'exemple qu'en donne le système commercialisé sous la marque « Easymass ® ».

Les pitons ou axes transversaux en saillie sur les faces latérales de la masse monobloc d'alourdissement, et le moyen d'accrochage de troisième point d'attelage, constituent des moyens de prise satisfaisants pour la manipulation et la fixation de la masse au dispositif de relevage du tracteur. Ce système est toutefois peu avantageux car l'utilisation de ces moyens de prise représente des opérations de montage supplémentaires à mettre en œuvre pour fixer ces moyens de prise sur le corps de masse, qui est une pièce venue de fonderie, ce qui augmente le temps et le coût global du processus de réalisation de la masse d'alourdissement.

Le dispositif de relevage du tracteur peut également être utilisé pour transporter une caisse, en particulier pour fournir un espace permettant d'embarquer différents outils sur le tracteur. En effet, les chantiers sont parfois éloignés de l'exploitation et il n'est donc pas toujours évident d'avoir les outils sous la main pour intervenir sur le matériel en cas de besoin. Une solution connue du document de brevet FR2953478 consiste à intégrer un caisson à outils dans le bloc en fonte constituant la masse de lestage. Pour ce faire, la masse de lestage comprend un logement situé sur le profil haut de la masse, qui peut être éventuellement recouvert d'un couvercle. Ce logement permet ainsi d'équiper les tracteurs agricoles d'un espace de rangement supplémentaire pouvant avantageusement accueillir différents outillages nécessaires aux travaux agricoles, tels que par exemple, des clés, des boules d'attelage, etc. Cet espace de rangement supplémentaire présente toutefois l'inconvénient de ne pouvoir procurer qu'un volume de rangement relativement réduit. En outre, la présence de l'espace de rangement implique d'aménager une cavité dans le corps de la masse de lestage, au détriment du poids global de celle-ci, ce qui n'est pas souhaitable. Le poids perdu peut être compensé en augmentant la taille de la masse de lestage, au détriment cette fois de la compacité.

Cette solution propose en outre un volume de rangement figé par construction. Or, les besoins en termes d'espace supplémentaire de rangement sur le tracteur et donc de caisse de rangement peuvent être extrêmement variés. Aussi, en fonction de la nature des travaux à réaliser, le relevage du tracteur peut être utilisé pour l'attelage, au moyen d'un support approprié, d'une caisse de rangement, qui peut alors être de tout type en termes de dimensions, et la fourniture d'une masse additionnelle passe alors par le dételage de la caisse de rangement et l'attelage au relevage du tracteur de la masse additionnelle. En cas de changements fréquents, toutes ces opérations d'attelage/dételage de la caisse de rangement ou de la masse additionnelle sont cependant laborieuses. Une autre solution est connue du document EP2380804A1 qui prévoit un contrepoids fonctionnel et de sécurité destiné à être disposé à l'avant d'un véhicule et constitué d'un coffre de rangement dont les parois latérales présentent des moyens de fixation de masses de lestage configurés pour coopérer avec des moyens prévus sur les masses. Cette conception accepte une variation dimensionnelle du coffre, avec toutefois, une configuration des moyens de fixation inchangée pour recevoir les mêmes masses.

Autrement dit, selon les besoins et les travaux à réaliser, il existe un besoin pour pouvoir atteler au tracteur des caisses de tous types et en particulier de dimensions variées, des masses additionnelles d'alourdissement, ou encore une combinaison de ces deux types d'équipement et ce, sans les inconvénient précités.

La présente invention vise à répondre à ce besoin.

A cet effet, la présente invention concerne, selon un premier de ses aspects, un dispositif de support, destiné à être accroché à un dispositif d'attelage, de type dispositif de relevage ou porte-masse d'un tracteur, notamment de type agricole, ledit dispositif de support étant constitué d'un châssis consistant en une structure métallique mécano-soudée comprenant des moyens de fixation au dispositif d'attelage, et caractérisé en ce qu'il est également constitué d'un plateau fixé auxdits moyens de fixation, qui s'étend en porte à faux par rapport auxdits moyens de fixation, ledit plateau présentant une face supérieure comportant un moyen de pré-positionnement et de centrage d'un caisson destiné à être rapporté sur ladite face supérieure dudit plateau, et une face inférieure au niveau de laquelle est formé au moins un logement de réception d'une masse additionnelle d'alourdissement venue de fonderie destinée à être rapportée au niveau de ladite face inférieure dudit plateau, ledit logement de réception étant adapté pour coopérer avec une protubérance correspondante de ladite masse additionnelle, de manière à constituer un ancrage sous la forme d'une liaison de type « queue d'aronde », dont la direction longitudinale est sensiblement parallèle à la direction de progression du tracteur.

Selon un mode de réalisation, lesdits moyens de fixation comportent trois points de fixation pour la liaison avec un dispositif de relevage de type trois points équipant le tracteur, les trois points de fixation étant disposés selon un triangle s'étendant dans un plan transversal à la direction de progression du tracteur.

Avantageusement, lesdits moyens de fixation comprennent une première et une deuxième chapes de fixation basses, agencées latéralement de part et d'autre dudit plateau, dans lesquelles sont fixés les deux points de fixation constituant la base dudit triangle avec lesquels est apte à coopérer un bras de levage respectif du dispositif de relevage pour atteler ledit dispositif de support, lesdites première et deuxième chapes de fixation basses étant reliées à une troisième chape de fixation haute, agencée en position sensiblement médiane par rapport aux première et deuxième chapes de fixation et dans laquelle est fixé le troisième point de fixation avec lequel est apte à coopérer un bras de retenue du dispositif de relevage.

De préférence, les première et deuxième chapes de fixation présentent au moins deux positions de montage desdits points de fixation dans le sens vertical permettant de modifier la garde au sol dudit châssis lorsque ledit dispositif de support est attelé au tracteur.

Selon un autre mode de réalisation, les moyens de fixation comportent un profilé s'étendant transversalement à la direction de progression du tracteur et formant une empreinte de fixation femelle orientée vers le tracteur lorsque ledit dispositif de support est attelé au tracteur, ladite empreinte de fixation femelle étant destinée à coopérer avec une empreinte mâle d'un porte-masse fixé rigidement au tracteur pour l'accrochage d'une masse d'alourdissement.

Avantageusement, ledit moyen de pré-positionnement et de centrage est constitué d'au moins une rainure pratiquée dans l'épaisseur dudit plateau, ladite rainure étant adaptée pour recevoir un élément d'assemblage faisant saillie d'une face d'une paroi de fond dudit caisson destinée à venir en regard de la face supérieure dudit plateau, ledit élément d'assemblage venant s'insérer dans ladite rainure pour permettre le positionnement dudit caisson sur ladite face supérieure dudit plateau.

De préférence, ladite rainure s'étend dans une direction sensiblement parallèle la direction de progression du tracteur et débouche au niveau d'une face du plateau orientée sensiblement transversalement à la direction de progression du tracteur située à l'opposé du tracteur par rapport audit plateau lorsque ledit dispositif de support est fixé sur le tracteur.

Avantageusement, ledit élément d'assemblage comporte une nervure présentant une section en queue d'aronde dans le plan transversal à la direction de progression du tracteur et en ce que ladite section en queue d'onde est reçue à l'intérieur de ladite rainure prévue dans ledit plateau.

L'invention concerne également un caisson, notamment caisson à outils, caractérisé en ce qu'il est adapté pour être rapporté sur un dispositif de support tel que décrit ci-dessus, ledit caisson comprenant une paroi de fond adaptée à être rapportée en applique contre ladite face supérieure dudit plateau et au moins un élément d'assemblage solidaire de ladite paroi de fond dudit caisson et apte à coopérer avec ledit moyen de pré-positionnement et de centrage agencé sur ladite face supérieure dudit plateau.

L'invention concerne encore un dispositif de lestage pour tracteur, notamment pour tracteur agricole, caractérisé en ce qu'il comprend un dispositif de support tel que décrit ci-dessus et un caisson tel que décrit ci-dessus, rapporté sur ledit dispositif de support.

D'autres caractéristiques et avantages de l'invention ressortiront clairement de la description qui en est faite ci-après d'un mode de réalisation particulier de l'invention présenté à titre indicatif et nullement limitatif, en référence aux figures suivantes, parmi lesquelles :
- la figure 1 illustre une vue schématique de face, en perspective, du dispositif de support selon un premier mode de réalisation de l'invention ;
- la figure 2 illustre une vue schématique de face, en perspective, du dispositif de support selon un deuxième mode de réalisation de l'invention ;
- la figure 3 illustre une vue schématique de côté, en perspective, du dispositif de support selon un troisième mode de réalisation de l'invention ;
- la figure 4 illustre une vue schématique de face, en perspective, d'un exemple de caisson destiné à être rapporté sur le dispositif de support de l'invention,
- la figure 5 illustre une vue de face du dispositif de support conforme à l'invention, pouvant être utilisé en tant que dispositif de lestage pour le tracteur, avec reprise d'une masse additionnelle par le dessous du dispositif de support et d'un caisson, tel que celui illustré à la figure 4, rapporté sur le dessus.

Dans la description qui va suivre, les éléments identiques ou similaires illustrés sur les figures sont désignés par les mêmes signes de référence et ne seront pas systématiquement décrits à nouveau.

Le dispositif de support 1 illustré sur les figures est destiné à être accroché à l'avant ou à l'arrière d'un tracteur, notamment de type agricole, par l'intermédiaire d'un dispositif d'attelage équipant le tracteur, en particulier de type dispositif de relevage avant ou arrière ou encore de type porte-masse avant ou arrière.

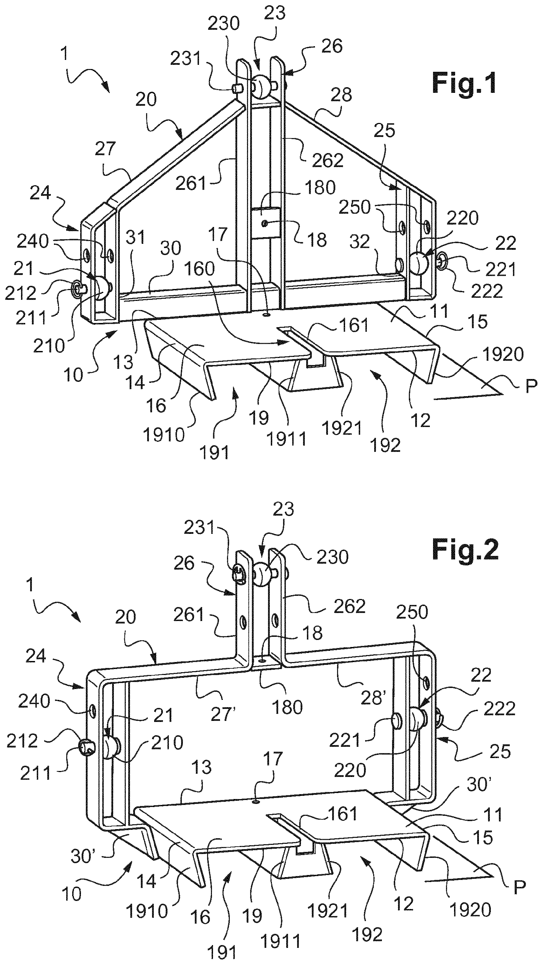

Le dispositif de support 1 représenté sur la figure 1 est constitué d'un châssis 10 présentant une structure métallique mécano-soudée. La structure mécano-soudée du châssis 10 comprend un premier élément de structure métallique 11 formant un plateau s'étendant dans un plan P, ce plateau 11 étant délimité par un bord avant 12 et un bord arrière 13 opposé au bord avant 12 et par un premier bord latéral 14 et un second bord latéral 15 opposé au premier bord latéral 14. Les notions « avant » ou « arrière » sont utilisées ici en relation avec un mode de réalisation où le dispositif de support est accroché à l'avant du tracteur. On comprend que dans le cas où le dispositif de support est accroché à l'arrière du tracteur, les notions « avant » ou « arrière » sont à inverser pour comprendre l'orientation réelle (l'avant devient l'arrière et réciproquement).

La structure mécano-soudée du châssis 10 comprend également un deuxième élément de structure métallique 20 formant des moyens de fixation au dispositif d'attelage du tracteur, qui sont fixés sur un élément intermédiaire 30 s'étendant sensiblement le long du bord arrière 13 du plateau 11. L'élément intermédiaire 30 est constitué d'une poutre métallique dont les extrémités respectives 31 et 32 font saillie de part et d'autre du plateau 11, respectivement du côté du premier bord latéral 14 et du second bord latéral 15.

Le mode de réalisation de la figure 1 concerne un dispositif de support destiné à être accroché à un dispositif de relevage de type trois points équipant le tracteur. Aussi, les moyens de fixation 20 comportent trois points de fixation 21, 22 et 23 pour assurer la liaison avec un tel dispositif de relevage de type trois points, ces trois points de fixation étant disposés selon un triangle s'étendant dans un plan transversal à la direction de progression du tracteur, lequel plan transversal étant un plan normal au plan P défini par le plateau 11. Suivant cet agencement, le plateau 11 fait donc saillie vers l'avant hors de l'aplomb des moyens de fixation 20 au dispositif de relevage du tracteur.

Plus précisément, les moyens de fixation 20 comprennent une première et une deuxième chapes de fixation 24 et 25, soudées respectivement au niveau des extrémités respectives 31 et 32 de la poutre métallique 30, à partir desquelles elles s'étendent perpendiculairement vers le haut, et dans lesquelles sont fixés respectivement les deux points de fixation 21 et 22, qui constituent la base du triangle de fixation au dispositif de relevage du tracteur. Des bras de levage respectifs du dispositif de relevage du tracteur sont destinés à coopérer respectivement avec les points de fixation 21 et 22 montés dans les chapes de fixation respectives 210 et 220.

Les deux points de fixation 21 et 22 sont constitués chacun d'une boule d'attelage, respectivement 210 et 220, montée sur une partie centrale d'un axe transversal respectif 211, 221 monté dans la chape de fixation correspondante, respectivement 24 et 25. Les boules d'attelage 210 et 220 peuvent avoir un profil sphérique ou toroïdal.

Les première et deuxième chapes de fixation 24 et 25 présentent préférentiellement plusieurs, au moins deux, positions de montage des points de fixation 21 et 22 dans le sens vertical, de façon à pouvoir modifier aisément la garde au sol du dispositif de support lorsque ce dernier est attelé au tracteur.

Chaque chape de fixation 24, 25 présente par exemple deux positions de montage des axes transversaux 211, 221 dans le sens vertical, de façon à définir deux positions en hauteur du dispositif de support 1 et en particulier du plateau 11, relativement au tracteur, dont une position haute et une position basse. On peut ainsi régler la garde au sol du dispositif de support via le positionnement en hauteur de ces axes transversaux 211, 221 dans leur chape de fixation respective 24, 25. Chaque position de montage d'un axe transversal 211, respectivement 221 sur sa chape de fixation 24, respectivement 25, est définie par une paire d'alésages 240, respectivement 250, situés en vis-à-vis sur les parois opposées de la chape de fixation, entre lesquelles est monté l'axe transversal. Une portion d'extrémité de chaque axe transversal débouche en outre à l'extérieur de la chape de fixation. Cette portion d'extrémité débouchant est par exemple bloquée par une goupille 212, 222 permettant un montage et un démontage aisés de l'axe transversal pour le positionnement en hauteur de celui-ci dans la chape de fixation.

Une troisième chape de fixation 26, destinée à accueillir le troisième point de fixation 23, qui constitue le sommet du triangle de fixation, est agencée en position sensiblement médiane par rapport aux première et deuxième chapes de fixation 24 et 25 dans lesquelles sont montés respectivement les deux points de fixation 21 et 22 constituant la base du triangle de fixation. Cette troisième chape de fixation 26 est dite haute, relativement aux deux autres chapes de fixation 24 et 25, dites basses. Cette troisième chape de fixation 26 est formée en partie haute d'une première et d'une deuxième platines verticales 261, 262, sensiblement parallèles à la direction de progression du tracteur, qui s'étendent perpendiculairement depuis une partie médiane de la poutre métallique 30 avec laquelle elles sont montées solidaires. Autrement dit, ces deux platines verticale 261, 262, en regard l'une de l'autre, s'étendent perpendiculairement à la poutre métallique 30 au niveau d'une partie médiane du bord arrière 13 du plateau 11.

L'agencement du troisième point de fixation 23 dans la chape de fixation 26 est similaire à celui des premier et deuxième points de fixation. Ainsi, le troisième point de fixation 23 est constitué également d'une boule d'attelage 230, montée sur une partie centrale d'un axe transversal 231 monté dans la chape de fixation 26. De la même façon qu'expliqué précédemment en relation avec les première et deuxième chapes de fixation 24 et 25, la troisième chape de fixation 26 peut présenter plusieurs positions de montage des points de fixation 21 et 22 dans le sens vertical.

Les deux chapes de fixation basses 24 et 25 sont reliée à la chape de fixation haute 26 par l'intermédiaire de deux traverses de rigidification 27 et 28, s'étendant sensiblement obliquement, fixées respectivement entre la première chape de fixation basse 24 et la partie haute de la première platine verticale 261 et entre la deuxième chape de fixation basse 25 et la partie haute de la deuxième platine verticale 262.

Le troisième point de fixation 23 constitue un moyen d'accrochage supplémentaire destiné à coopérer avec un bras de retenue haut du dispositif de relevage du tracteur, notamment pour empêcher le balancement du dispositif de support autour des axes transversaux 211 et 221 des premier et deuxième points de fixation 21 et 22.

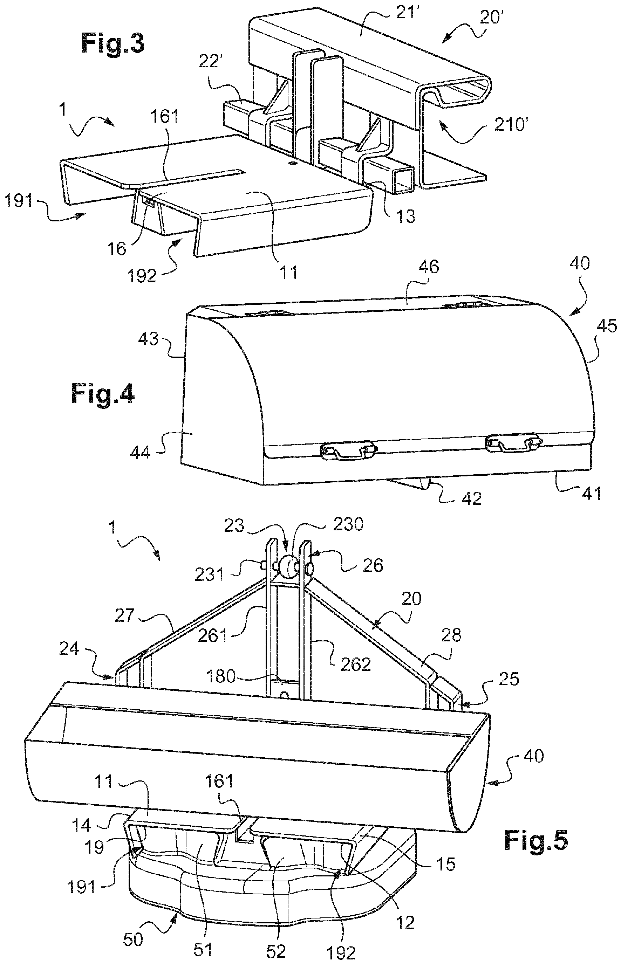

Par ailleurs, le plateau 11 présente une face supérieure 16 sur laquelle est destiné à être rapporté un caisson, tel qu'un caisson 40 représenté à la figure 4. Le caisson 40 est par exemple réalisée de manière mécano-soudée et comporte une paroi de fond 41 destinée à venir en appui contre la face supérieure 16 du plateau 11. Il comprend également une paroi arrière 43 s'étendant sensiblement verticalement à la paroi de fond, entre deux parois latérales 44, 45.

Ce dernier est aménagé de façon à procurer un moyen 160 de pré-positionnement et de centrage du caisson 40 destiné à être rapporté sur sa face supérieure 16. Ce moyen 160 de pré-positionnement et de centrage comprend, selon l'exemple de réalisation, un évidement préférentiellement en forme de rainure 161 rectangulaire, pratiquée au travers de la face supérieure 16 du plateau 11. La rainure 161 s'étend préférentiellement le long d'un axe médian du plateau 11 dans une direction sensiblement parallèle la direction de progression du tracteur et débouche au niveau de la face avant 12 du plateau 11. La rainure 161 est prévue pour recevoir une nervure 42 correspondante, agencée le long d'un axe médian de la face de la paroi de fond 41 du caisson venant en regard avec la face supérieure 16 du plateau 11, de sorte que la nervure 42 vienne s'insérer dans la rainure 161 pour permettre le bon positionnement du caisson 40 sur face supérieure 16 du plateau 11. Dans cette position d'insertion, la nervure 42 reçue dans la rainure 111 vient en butée dans celle-ci, ce qui permet de figer le caisson 40 sur la face supérieure 16 du plateau 11 dans une position prédéterminée lorsqu'il y est rapporté. Dans cette position, il est prévu que la paroi arrière 43 du caisson 40 vienne sensiblement en appui au moins contre une portion des première et deuxième platines verticales 261 et 262 s'étendant verticalement au niveau d'une partie médiane du bord arrière du plateau 11. En fonction des dimensions variées du caisson pouvant être rapporté sur la plateau 11, la paroi arrière 43 du caisson 40 peut également venir sensiblement en appui au moins contre une portion des première et deuxième chapes de fixation 24 et 25 agencées verticalement de part et d'autre du plateau 11.

La nervure 42 faisant saillie de la paroi de fond 41 du caisson 40 peut présenter par exemple une section en V dans le plan transversal à la direction de progression du tracteur, permettant un ajustement aisé dans la rainure rectangulaire 161 du plateau.

De façon préférentielle, la nervure 42 faisant saillie de la paroi de fond 41 du caisson 40 présente une section en queue d'aronde dans le plan transversal à la direction de progression du tracteur, allant en s'élargissant depuis la paroi de fond du caisson. Ainsi, une fois introduite dans l'ouverture de la rainure 161 au travers de la face avant 12 du plateau 11, la nervure 42 est adaptée à coulisser dans la rainure 161 et est bloquée selon une direction verticale sensiblement perpendiculaire à la face supérieure 16 du plateau 11, permettant d'assurer l'assemblage du caisson 40 sur le plateau 11. La coopération entre la nervure 42 en queue d'aronde agencée sur la paroi de fond 41 du caisson 40 destiné à être rapporté sur la face supérieure 16 du plateau 11 et la rainure 161 pratiquée au travers du plateau 11, permet la prise de tous types de caissons sur le plateau.

En outre le châssis mécano soudé 10 constituant le dispositif de support 1 de l'invention, comporte des orifices de fixation 17, 18, qui sont prévus pour recevoir des vis de fixation (non représentées) venant à coopérer avec des parois du caisson rapporté pour la fixation de celui-ci sur le châssis mécano-soudé 10. On prévoit de préférence un premier orifice de fixation 17 agencé au niveau du plateau 11, par exemple en partie arrière de celui-ci, et un deuxième orifice de fixation 18, agencé au niveau d'une platine de fixation 180, fixée entre les première et deuxième platines verticales 261 et 262. Selon cet agencement, la paroi de fond 41 et la paroi arrière 43 du caisson 40 comportent des orifices de fixation correspondants pour le passage des vis de fixation destinées à pénétrer dans les orifices de fixation 17 et 18 prévus respectivement sur le plateau 11 et la platine de fixation 180 du châssis mécano-soudé 10. Lorsque le caisson 40 rapporté sur la face supérieure du plateau 11 est positionné dans la position prédéterminée via le moyen de pré-positionnement et de centrage 160, les orifices ménagés sur les parois de fond et arrière du caisson 40 sont alignés avec les orifices de fixation 17 et 18 agencés sur le plateau 11 et la platine de fixation 180 du châssis mécano-soudé 10.

Par ailleurs, conformément à l'invention, et comme il est représenté à la figure 5, le châssis mécano-soudé 10 est conçu pour permettre de supporter, dans une partie inférieure du plateau 11, une masse additionnelle 50, dite monobloc, d'une seule pièce, par exemple en fonte, venue de fonderie. Le poids de la masse principale peut être variable en fonction des besoins et peut être par exemple de 600 ou 900 Kg. Ainsi, avec une telle masse reprise par le dessous du châssis mécano-soudé 10, le dispositif de support 1 de l'invention permet de lester en fonction des besoins l'avant ou l'arrière du tracteur lorsqu'il y est attelé.

Pour ce faire, le plateau 11 du châssis mécano-soudé 10 présente, sur sa face inférieure 19, deux logement 191, 192 en queue d'aronde femelle, s'étendant selon la direction de progression du tracteur, de part et d'autre de la rainure rectangulaire 161 pratiquée dans l'axe médian du plateau11. Chaque logement en queue d'aronde femelle 191, 192 est formé par deux plaques planes en vis-à-vis soudées sous le plateau 11, respectivement une plaque plane d'extrémité 1910, 1920, soudée au niveau des bords latéraux 14, 15 du plateau et une plaque plane sensiblement médiane 1911, 1921 soudée dans une zone sensiblement à proximité de la rainure 161 du plateau. Les plaques planes d'extrémité respectivement 1910 et 1920 et les plaques planes sensiblement médianes respectivement 1911 et 1921 s'étendent sous le plateau de façon à définir entre elles un espace libre constituant le logement en queue d'aronde femelle correspondant.

Les logements 191 et 192 en queue d'aronde femelle sont prévus pour coopérer avec deux protubérances correspondantes en queue d'aronde mâle 51, 52 agencés en partie supérieure de la masse additionnelle 50. Les logements 191 et 192 sont débouchant sur la face avant du dispositif de support, de sorte que les protubérances 51, 52 sont introduites dans les logements 191, 192 par la face avant du dispositif de support 1, puis la masse additionnelle est déplacée vers l'arrière. A l'arrière, les logements 191, 192 peuvent être non débouchant ou être débouchant. Ainsi, les logements 191, 192 en forme de queue d'aronde femelle, agencés en partie inférieure du plateau 11, permettent le montage par emboîtement d'une masse additionnelle d'alourdissement 50 suivant une direction d'emboîtement sensiblement parallèle à la direction de progression du tracteur.

La figure 2 illustre une variante de réalisation des moyens de fixation au dispositif de relevage trois points du tracteur. Selon cette variante de réalisation, les chapes de fixation basses 24, 25 destinées à coopérer avec les deux bras de relevage du dispositif de relevage du tracteur, sont fixées directement au plateau 11, de part et d'autre de celui-ci, sans la présence de l'élément intermédiaire constitué par la poutre métallique 30. Plus précisément, les chapes de fixation 24 et 25 sont fixées sur un côté respectif du plateau 11, au niveau de la partie arrière de celui-ci délimitée par le bord arrière 13 du plateau 11, par l'intermédiaire d'un élément de fixation 30'. Cet élément de fixation 30' présente une première partie fixée sur la face externe d'une plaque plane d'extrémité respective 1910, 1920 délimitant un côté respectif du plateau 11, et une deuxième partie depuis laquelle s'étend verticalement vers le haut la chape de fixation basse correspondante 24, 25. Deux traverses de rigidification 27', 28' s'étendent parallèlement au plan P en direction de l'axe médian du plateau 11 depuis une partie supérieure des chapes de fixation basses 24 et 25, opposée à l'élément de fixation 30', de façon à former, avec les côtés intérieurs 242, 252 en regard l'un de l'autre des chapes de fixation 24 et 25, un cadre qui s'étend dans un plan normal au plan P (soit transversal à la direction de progression du tracteur). Les extrémités respectives venant en vis-à-vis des deux traverses de rigidification 27' et 28', situées à l'opposé des chapes de fixation basses 24 et 25, sont reliées aux première et deuxième platines verticales 261 et 262 formant la troisième chape de fixation 26, qui fait faisant saillie vers le haut par rapport audit cadre en position sensiblement médiane par rapport aux première et deuxième chapes de fixation 24 et 25.

Suivant cette variante de réalisation, lorsqu'un caisson tel que le caisson 40 illustré à la figure 4, est rapporté sur la face supérieure 16 du plateau 11, la partie arrière de ce caisson est destinée à venir se loger dans le cadre formé par les traverses horizontales 27' et 28' et les chapes de fixations verticales 24 et 25. Autrement dit, une partie arrière respective des parois latérales 44 et 45 du caisson est disposée de façon immédiatement adjacente aux côtés intérieurs respectifs 242, 252 des chapes de fixation basses 24 et 25 et un bord supérieur arrière 46 du caisson est disposé de de façon immédiatement sous-jacente à la face interne des traverses 27', 28', soit la face de ces traverses en regard du plateau 11. La platine de fixation 180 accueillant le deuxième orifice de fixation 18 pour la fixation du caisson, est orientée parallèlement au bord supérieur arrière 46 du caisson, entre les deux platines verticales 261, 262.

La figure 3 illustre une variante de réalisation, qui concerne le cas où le dispositif de support 1 est destiné à être accroché à un porte-masse du tracteur destinée à l'accrochage d'une masse d'alourdissement, lequel porte-masse constitue une alternative au dispositif de relevage évoqué précédemment, pour les tracteurs qui ne sont pas équipés d'un tel dispositif. Aussi, dans cette variante de réalisation, le deuxième élément de structure métallique 20' de la structure mécano-soudée du châssis, formant les moyens de fixation au dispositif d'attelage du tracteur de type porte-masse, comprend un profilé 21', s'étendant transversalement à la direction de progression du tracteur, le long du bord arrière 13 du plateau 11. Ce profilé 21' est par exemple fixé au plateau 11 par l'intermédiaire d'une poutre 22' soudée au bord arrière 13 du plateau 11, à laquelle il est solidarisé. Le profilé 21' définit une empreinte de fixation femelle 210', qui est orientée vers le tracteur lorsque ledit dispositif de support 1 est attelé au tracteur. Cette empreinte de fixation femelle 210' est adaptée pour coopérer avec une empreinte mâle correspondante du porte-masse fixé au tracteur, la coopération des empreintes mâles et femelles assurant l'accrochage du dispositif de support 1 au porte-masse équipant le tracteur.

## Revendications

1. Dispositif de support (1), destiné à être accroché à un dispositif d'attelage, de type dispositif de relevage ou porte-masse d'un tracteur, notamment de type agricole, et constitué d'un châssis (10) consistant en une structure métallique mécano-soudée comprenant des moyens de fixation (20, 20') au dispositif d'attelage, ledit dispositif de support étant **caractérisé en ce qu'**il consiste également en un plateau (11) fixé auxdits moyens de fixation, qui s'étend en porte à faux par rapport auxdits moyens de fixation, ledit plateau (11) présentant une face supérieure (16) comportant un moyen de pré-positionnement et de centrage (160) d'un caisson (40) destiné à être rapporté sur ladite face supérieure (16) dudit plateau, et une face inférieure (19) au niveau de laquelle est formé au moins un logement de réception (191, 192) d'une masse additionnelle d'alourdissement (50) destinée à être rapportée au niveau de ladite face inférieure (19) dudit plateau (11), ledit logement de réception étant adapté pour coopérer avec une protubérance correspondante (51, 52) de ladite masse additionnelle, de manière à constituer un ancrage sous la forme d'une liaison de type « queue d'aronde », dont la direction longitudinale est sensiblement parallèle à la direction de progression du tracteur.

2. Dispositif selon la revendication 1, **caractérisé en ce que** lesdits moyens de fixation (20) comportent trois points de fixation (21, 22, 23) pour la liaison avec un dispositif de relevage de type trois points équipant le tracteur, les trois points de fixation étant disposés selon un triangle s'étendant dans un plan transversal à la direction de progression du tracteur.

3. Dispositif selon la revendication 2, **caractérisée en ce que** lesdits moyens de fixation (20) comprennent une première et une deuxième chapes de fixation basses (24, 25), agencées latéralement de part et d'autre dudit plateau (11), dans lesquelles sont fixés les deux points de fixation (21, 22) constituant la base dudit triangle avec lesquels est apte à coopérer un bras de levage respectif du dispositif de relevage pour atteler ledit dispositif de support, lesdites première et deuxième chapes de fixation basses (24, 25) étant reliées à une troisième chape de fixation haute (26), agencée en position sensiblement médiane par rapport aux première et deuxième chapes de fixation et dans laquelle est fixé le troisième point de fixation (23) avec lequel est apte à coopérer un bras de retenue du dispositif de relevage.

4. Dispositif selon la revendication 3, **caractérisé en ce que** les première et deuxième chapes de fixation (24, 25) présentent au moins deux positions de montage desdits points de fixation dans le sens vertical permettant de modifier la garde au sol dudit châssis lorsque ledit dispositif de support est attelé au tracteur.

5. Dispositif selon la revendication 1, **caractérisé en ce que** lesdits moyens de fixation (20') comportent un profilé (21') s'étendant transversalement à la direction de progression du tracteur et formant une empreinte de fixation femelle (210') orientée vers le tracteur lorsque ledit dispositif de support est attelé au tracteur, ladite empreinte de fixation femelle (210') étant destinée à coopérer avec une empreinte mâle d'un porte-masse fixé rigidement au tracteur pour l'accrochage d'une masse d'alourdissement.

6. Dispositif selon l'une quelconque des revendications précédentes, **caractérisé en ce que** ledit moyen de pré-positionnement et de centrage '160) est constituée d'au moins une rainure (161) pratiquée dans l'épaisseur dudit plateau (11), ladite rainure (161) étant adaptée pour recevoir un élément d'assemblage (42) faisant saillie d'une face d'une paroi de fond (41) dudit caisson destinée à venir en regard de la face supérieure (16) dudit plateau (11), ledit élément d'assemblage (42) venant s'insérer dans ladite rainure (161) pour permettre le positionnement dudit caisson sur ladite face supérieure dudit plateau.

7. Dispositif selon la revendication 6, **caractérisée en ce que** ladite rainure (161) s'étend dans une direction sensiblement parallèle la direction de progression du tracteur et débouche au niveau d'une face (12) du plateau orientée sensiblement transversalement à la direction de progression du tracteur située à l'opposé du tracteur par rapport audit plateau lorsque ledit dispositif de support est fixé sur le tracteur.

8. Dispositif selon la revendication 6 ou 7, **caractérisé en ce que** ledit élément d'assemblage (42) comporte une nervure présentant une section en queue d'aronde dans le plan transversal à la direction de progression du tracteur et **en ce que** ladite section en queue d'onde est reçue à l'intérieur de ladite rainure (161) prévue dans ledit plateau (11).

9. Caisson (40), notamment caisson à outils, **caractérisé en ce qu'**il est adapté pour être rapporté sur un dispositif de support (1) selon l'une quelconque des revendications précédentes, ledit caisson comprenant une paroi de fond (41) adaptée à être rapportée en applique contre ladite face supérieure (16) dudit plateau (11) et au moins un élément d'assemblage (42) solidaire de ladite paroi de fond dudit caisson et apte à coopérer avec ledit moyen de pré-positionnement et de centrage (160) agencé sur ladite face supérieure (16) dudit plateau (11).

10. Dispositif de lestage pour tracteur, notamment pour tracteur agricole, **caractérisé en ce qu'**il comprend un dispositif de support (1) selon l'une quelconque des revendications 1 à 8 et un caisson (40) selon la revendication 9, rapporté sur ledit dispositif de support.

## Patentansprüche

1. Haltevorrichtung (1), die zum Ankoppeln an einer Anhängevorrichtung bestimmt ist, vom Typ Hebevorrichtung oder Massenträger eines Traktors, insbesondere vom landwirtschaftlichen Typ, und bestehend aus einem Rahmen (10), der aus einer maschinengeschweißten Metallstruktur besteht, umfassend Befestigungsmittel (20, 20') an der Anhängevorrichtung, wobei die Haltevorrichtung **dadurch gekennzeichnet ist, dass** sie auch aus einer Platte (11) besteht, die an den Befestigungsmitteln befestigt ist, die sich überhängend in Bezug auf die Befestigungsmittel erstreckt, wobei die Platte (11) eine obere Fläche (16) aufweist, die ein Vorpositionierungs- und Zentriermittel (160) einer Kiste (40) aufweist, die bestimmt ist, auf der oberen Fläche (16) der Platte angebracht zu sein, und eine untere Fläche (19), in deren Bereich mindestens eine Empfangsaufnahme (191, 192) einer zusätzlichen Beschwerungsmasse (50) gebildet ist, die bestimmt ist, im Bereich der unteren Fläche (19) der Platte (11) angebracht zu sein, wobei die Empfangsaufnahme zum Zusammenwirken mit einem entsprechenden Vorsprung (51, 52) der zusätzlichen Masse geeignet ist, so dass eine Verankerung in Form einer Verbindung vom Typ "Schwalbenschwanz" gebildet wird, deren Längsrichtung etwa parallel zur Fortbewegungsrichtung des Traktors ist.

2. Vorrichtung nach Anspruch 1, **dadurch gekennzeichnet, dass** die Befestigungsmittel (20) drei Befestigungspunkte (21, 22, 23) für die Verbindung mit einer Hebevorrichtung vom Typ Dreipunkt aufweisen, die den Traktor ausrüstet, wobei die drei Befestigungspunkte gemäß einem Dreieck angeordnet sind, das sich in einer zu der Fortbewegungsrichtung des Traktors transversalen Ebene erstreckt.

3. Vorrichtung nach Anspruch 2, **dadurch gekennzeichnet, dass** die Befestigungsmittel (20) eine erste und eine zweite untere Befestigungshalterung (24, 25) umfassen, die seitlich beiderseits der Platte (11) eingerichtet sind, in welchen die zwei Befestigungspunkte (21, 22) befestigt sind, die die Basis des Dreiecks bilden, mit denen ein jeweiliger Hebearm der Hebevorrichtung zum Zusammenwirken imstande ist, um die Haltevorrichtung anzuhängen, wobei die erste und zweite untere Befestigungshalterung (24, 25) mit einer dritten oberen Befestigungshalterung (26) verbunden sind, die in einer in Bezug auf die erste und zweite Befestigungshalterung etwa mittleren Position eingerichtet ist und in welcher der dritte Befestigungspunkt (23) befestigt ist, mit dem ein Haltearm der Hebevorrichtung zum Zusammenwirken imstande ist.

4. Vorrichtung nach Anspruch 3, **dadurch gekennzeichnet, dass** die erste und zweite Befestigungshalterung (24, 25) mindestens zwei Montagepositionen der Befestigungspunkte in vertikaler Richtung aufweisen, die erlauben, die Höhe über dem Boden des Rahmens zu verändern, wenn die Haltevorrichtung am Traktor angehängt ist.

5. Vorrichtung nach Anspruch 1, **dadurch gekennzeichnet, dass** die Befestigungsmittel (20') ein Profil (21') aufweisen, das sich transversal zur Fortbewegungsrichtung des Traktors erstreckt und eine weibliche Befestigungsverformung (210') bildet, die zum Traktor ausgerichtet ist, wenn die Haltevorrichtung am Traktor angehängt ist, wobei die weibliche Befestigungsverformung (210') zum Zusammenwirken mit einer männlichen Verformung eines starr am Traktor befestigten Massenträgers zum Ankoppeln einer Beschwerungsmasse bestimmt ist.

6. Vorrichtung nach einem der vorangehenden Ansprüche, **dadurch gekennzeichnet, dass** das Vorpositionierungs- und Zentriermittel ('160) von mindestens einer in die Stärke der Platte (11) eingearbeiteten Rille (161) gebildet ist, wobei die Rille (161) zur Aufnahme eines Verbindungselements (42) geeignet ist, das aus einer Fläche einer Bodenwand (41) der Kiste hervorsteht, die bestimmt ist, gegenüber der oberen Fläche (16) der Platte (11) zu kommen, wobei sich das Verbindungselement (42) in die Rille (161) einfügt, um das Positionieren der Kiste auf der oberen Fläche der Platte zu erlauben.

7. Vorrichtung nach Anspruch 6, **dadurch gekennzeichnet, dass** sich die Rille (161) in einer Richtung erstreckt, die etwa parallel zur Fortbewegungsrichtung des Traktors ist und im Bereich einer Fläche (12) der Platte ausmündet, die etwa transversal zur Fortbewegungsrichtung des Traktors ausgerichtet ist, die sich in Bezug auf die Platte gegenüber dem Traktor befindet, wenn die Haltevorrichtung auf dem Traktor befestigt ist.

8. Vorrichtung nach Anspruch 6 oder 7, **dadurch gekennzeichnet, dass** das Verbindungselement (42) eine Rippe aufweist, die in der zur Fortbewegungsrichtung des Traktors transversalen Ebene einen Schwalbenschwanz-Querschnitt aufweist, und dass der Schwalbenschwanz-Querschnitt im Inneren der in der Platte (11) vorgesehenen Rille (161) aufgenommen ist.

9. Kiste (40), insbesondere Werkzeugkiste, **dadurch gekennzeichnet, dass** sie zum Anbringen auf einer Haltevorrichtung (1) nach einem der vorangehenden Ansprüche geeignet ist, wobei die Kiste eine Bodenwand (41) umfasst, die zum aufliegenden Anbringen auf der oberen Fläche (16) der Platte (11) geeignet ist, und mindestens ein Verbindungselement (42), das mit der Bodenwand der Kiste fest verbunden ist und zum Zusammenwirken mit dem Vorpositionierungs- und Zentriermittel (160) imstande ist, das auf der oberen Fläche (16) der Platte (11) eingerichtet ist.

10. Ballastvorrichtung für Traktor, insbesondere Landwirtschaftstraktor, **dadurch gekennzeichnet, dass** sie eine Haltevorrichtung (1) nach einem der Ansprüche 1 bis 8 und eine Kiste (40) nach Anspruch 9 umfasst, die auf der Haltevorrichtung angebracht ist.

## Claims

1. A support device (1), intended to be hung to a hitch device of the lifting device or mass carrier type for a tractor, especially of the agricultural type, and constituted by a frame (10) consisting in a mechanically welded metallic structure comprising means (20, 20') for securing it to the hitch device, said support device being **characterized in that** it also consists in a plate (11) fixed to said securing means, that extends by overhanging relatively to said securing means, said plate (11) having a upper face (16) comprising a prepositioning and centering means (160) for a box (40) intended to be added on said upper face (16) of said plate, and a lower face (19) at the level of which is formed at least a receiving housing (191, 192) for an additional ballasting weight (50) intended to be added at the level of said lower face (19) of said plate (11), said receiving housing being adapted to cooperate with a corresponding protuberance (51, 52) of said additional weight, so as to form an anchoring in the shape of a connection of the "dovetail" type, whose longitudinal direction is substantially parallel to the traveling direction of the tractor.

2. The device according to claim 1, **characterized in that** said securing means (20) comprise three securing points (21, 22, 23) for the connection with a lifting device of the three points type equipping the tractor, the three securing points being disposed according to a triangle extending in a plan transversal to the traveling direction of the tractor.

3. The device according to claim 2, **characterized in that** said securing means (20) comprise first and second lower securing yokes (24, 25), arranged laterally on both sides of said plate (11), into which the two securing points (21, 22) are fixed to constitute the base of said triangle with which a respective lifting arm of the lifting device is ready to cooperate in order to hitch said support device, said first and second lower securing yokes (24, 25) being connected to a third upper securing yoke (26), arranged in a substantially median position relatively to the first and second securing yokes and in which the third fixing point (23) with which is ready to cooperate a holding arm of the lifting device is fixed.

4. The device according to claim 3, **characterized in that** the first and second securing yokes (24, 25) provide at least two mounting positions for said securing points in the vertical direction making it possible to modify the ground clearance of said frame when said support device is hitched to the tractor.

5. The device according to claim 1, **characterized in that** said securing means (20') include a section (21') extending transversally to the traveling direction of the tractor and forming a female securing imprint (210') directed towards the tractor when said support device is hitched to the tractor, said female securing imprint (210') being intended to cooperate with a male imprint of a mass carrier rigidly secured to the tractor in order to fix a ballasting weight.

6. The device according to any of the preceding claims, **characterized in that** said prepositioning and centering means (160) consists of at least one groove (161) provided in the thickness of said plate (11), said groove (161) being adapted to receive a mounting member (42) extending from a face of a bottom wall (41) of said box intended to be provided facing to the upper face (16) of said plate (11), said mounting member (42) coming to fit within said groove (161) to allow the positioning of said box on said upper face of said plate.

7. The device according to claim 6, **characterized in that** said groove (161) extends in a direction substantially parallel to the traveling direction of the tractor and open out at a face (12) of the plate directed substantially transversally to the traveling direction of the tractor, located at the opposite of the tractor relatively to said plate when said support device is secured on the tractor.

8. The device according to claim 6 or 7, **characterized in that** said mounting member (42) includes a rib having a dovetail section in the plan transversal to the traveling direction of the tractor and **in that** said dovetail section is received within said groove (161) provided in said plate (11).

9. A box (40), especially a tool box, **characterized in that** it is adapted to be added on a support device (1) according to any of the preceding claims, said box comprising a bottom wall (41) adapted to be added in extension against said upper face (16) of said plate (11) and at least a mounting member (42) unitary with said bottom wall of said box and ready to cooperate with said prepositioning and centering means (160) provided on said upper face (16) of said plate (11).

10. A ballasting device for a tractor, especially for an agricultural tractor, **characterized in that** it comprises a support device (1) according to any of claims 1 to 8 and a box (40) according to claim 9, added on said support device.
